(19) **Europäisches Patentamt**
**European Patent Office**
**Office européen des brevets**

(11) **EP 4 507 102 A1**

(12) # EUROPEAN PATENT APPLICATION

(43) Date of publication:
**12.02.2025 Bulletin 2025/07**

(21) Application number: **23205475.9**

(22) Date of filing: **24.10.2023**

(51) International Patent Classification (IPC):
*H01M 50/403* (2021.01)    *H01M 10/052* (2010.01)
*H01M 50/417* (2021.01)    *H01M 50/446* (2021.01)
*H01M 50/457* (2021.01)

(52) Cooperative Patent Classification (CPC):
**H01M 50/403; H01M 10/052; H01M 50/417;
H01M 50/446; H01M 50/457**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2023 TW 112130240**

(71) Applicant: **BenQ Materials Corporation
33341 Guishan Township (TW)**

(72) Inventors:
• **LO, Wan-Ting
33341 Taoyuan City (TW)**
• **LO, Yi-Ting
33341 Taoyuan City (TW)**
• **CHENG, Meng-Chia
33341 Taoyuan City (TW)**

(74) Representative: **Murgitroyd & Company
Murgitroyd House
165-169 Scotland Street
Glasgow G5 8PL (GB)**

(54) **A LOW THERMAL SHRINKAGE SEPARATOR AND A METHOD FOR MANUFACTURING THEREOF**

(57) A low thermal shrinkage separator and a method for manufacturing thereof is disclosed. The method comprises providing a porous polyolefin substrate with a plurality of porous structures on surfaces and interiors thereof, and applying a prescursor solution comprising a titanium alkoxide and hexamethyldisilazane and subsequently applying an alcohol solution to form a low thermal shrinkage thin film formed on the surfaces and the sidewalls of the porous structures of the porous polyolefin substrate. The present method can enhance the low thermal shrinkage and electrolyte wettability of the separator.

EP 4 507 102 A1

EP 4 507 102 A1

**Description**

<u>CROSS - REFERENCE TO RELATED APPLICATION</u>

This application claims the benefit of Taiwanese patent application serial No. 112130240, filed on Aug. 11, 2023, the subject matter of which is incorporated herein by reference.

<u>BACKGROUND OF THE INVENTION</u>

**Field of Invention**

This invention relates to a method for manufacturing a low thermal shrinkage separator, and a separator with thermal shrinkage resistance and wettability of the electrolyte is manufactured thereby.

**Description of Related Art**

In the internal structure of a lithium-ion battery, the separator is a key component, and is usually a porous polymer film, which acts as a physical barrier to prevent direct contact between two electrodes and controls ion transport in the battery. The separator of the lithium-ion battery is made of polyolefin material as the substrate, that is, polyethylene (PE) or polypropylene (PP) and is mainly manufactured by dry-stretching method or wet-stretching method. The two methods basically are to melt a polymer resin, extrude the molten polymer resin into a film, and then stretch the film to form appropriate pores therein. The dry-stretching separator is usually thicker and can be stacked in multi-layers with high safety and low cost under high power. The wet-stretching separator is suitable for coating a ceramic coating on the surface of a polyolefin substrate to form a composite separator due to its thin thickness, high porosity and uniform pore size. Compared with the wet-stretching separator, the dry-stretching separator has certain advantages in mechanical properties, ion permeability and chemical resistance of electrolyte, and is widely used in ternary lithium batteries with high energy density. However, when the temperature of the lithium-ion battery exceeds 130°C, the shrinkage of the dry-stretching separator will easily cause the electrodes to directly contact each other and cause a short circuit. Therefore, the dry-stretching separator needs to overcome the disadvantages s of high thermal shrinkage and poor wettability with electrolyte.

<u>SUMMARY OF THE INVENTION</u>

The present invention discloses a method for manufacturing a low thermal shrinkage separator and a separator manufactured thereby. The separator has enhanced thermal shrinkage resistance and can improve electrolyte wettability simultaneously.

One aspect of the present invention is to provide a method for manufacturing a low thermal shrinkage separator, comprising the steps of providing a porous polyolefin substrate with a plurality of porous structures on surfaces and interiors thereof; applying a precursor solution containing a 0.1wt% to 3wt% titanium alkoxide solution and a 0.2wt% to 3wt% hexamethyldisilazane to the porous polyolefin substrate; and applying a 30wt% to 70wt% alcohol solution to form a low thermal shrinkage thin film on the surfaces and sidewalls of the porous structures of the porous polyolefin substrate.

According to an embodiment of the present method, the titanium alkoxide of the precursor solution is titanium methoxide, titanium ethoxide, titanium isopropoxide, titanium tert-butoxide, or combinations thereof, and is preferably titanium isopropoxide, and a solvent of the precursor solution is methanol, ethanol, isopropanol, or combinations thereof.

According to an embodiment of the present method, the alcohol solution is an aqueous solution of methanol, ethanol, isopropanol, ethoxyethanol, allyl alcohol, ethylene glycol, or combinations thereof.

According to an embodiment of the present method, the alcohol solution further comprises a tackifier, and the tackifier is used in an amount of 0.05wt% to 3wt%.

According to an embodiment of the present method, the tackifier is poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

Another aspect of the present invention is to provide a low thermal shrinkage separator, comprising a porous polyolefin substrate with a plurality of porous structures on surfaces and interiors thereof; and a low thermal shrinkage thin film formed on the surfaces and sidewalls of the porous structures of the porous polyolefin substrate; wherein the low thermal shrinkage thin film is a composite thin layer formed of titanium oxide and/or titanium hydroxide reacted by the titanium alkoxide and the alcohol solution, and hexamethyldisilazane.

The above and other aspects of the invention will become better understood with regard to the following detailed description of the preferred but non-limiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

## DETAILED DESCRIPTION OF THE INVENTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present invention may be practiced in case no such specific details.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The present invention is to provide a method for manufacturing a low thermal shrinkage separator, wherein a low thermal shrinkage thin film is formed on the surfaces and sidewalls of the porous structures of the porous polyolefin substrate. The mechanical properties, ion permeability and chemical resistance of electrolyte of dry-stretching porous polyolefin substrate can be maintained, and also the thermal shrinkage resistance and electrolyte wettability can be improved without significantly increasing the thickness of the porous polyolefin substrate.

The separator prepared by the present method has a better thermal stability, wherein the thermal shrinkage rate thereof in machine direction (MD) is less than 20% after heating at 130°C for 1 hour, and the thermal shrinkage rate thereof in machine direction (MD) is less than 40% after heating at 150°C for 1 hour, and the wettability for electrolyte can also be enhanced.

According to an embodiment of the present method, the porous polyolefin substrate is a single-layered or multi-layered porous polyolefin substrate of polyethylene, polypropylene or copolymers thereof obtained by dry-stretching method, for example, single-layered polyethylene, single-layered polypropylene, double-layered polyethylene/polypropylene or triple-layered polypropylene/polyethylene/polypropylene, but not limited thereto. In one embodiment of the present invention, the thickness of the porous polyolefin substrate is between 5 $\mu$m and 30 $\mu$m, preferably between 7 $\mu$m and 25 $\mu$m, and the porosity of the porous polyolefin substrate is between 40% and 70%, preferably between 43% and 65%.

The present invention is to provide a method for manufacturing a low thermal shrinkage separator, comprising the steps of providing a porous polyolefin substrate with a plurality of porous structures on surfaces and interiors thereof; applying a precursor solution containing a 0.1wt% to 3wt% titanium alkoxide solution and a 0.2wt% to 3wt% hexamethyldisilazane to the porous polyolefin substrate; and applying a 30wt% to 70wt% alcohol solution to form a low thermal shrinkage thin film on the surfaces and sidewalls of the porous structures of the porous polyolefin substrate.

According to an embodiment of the present method, the titanium alkoxide of the precursor solution is titanium methoxide, titanium ethoxide, titanium isopropoxide, titanium tert-butoxide, or combinations thereof, and is preferably titanium isopropoxide, and a solvent of the precursor solution is methanol, ethanol, isopropanol, or combinations thereof.

According to an embodiment of the present method, the hexamethyldisilazane can stabilize the titanium alkoxide solution in order to avoid the premature precipitation of titanium alkoxide during the reaction of the titanium alkoxide solution with the alcohol solution, and allow the titanium alkoxide to enter the pores of the porous polyolefin substrate to form a thin film of titanium oxide and/or titanium hydroxide on the sidewalls of the porous structures with the alcohol solution. The using amount of hexamethyldisilazane in the precursor solution is between 0.2 wt% and 3 wt%, preferably between 0.5 wt% and 3 wt%, especially between 0.5 wt% and 2 wt%.

According to an embodiment of the present method, the alcohol solution is an aqueous solution of methanol, ethanol, isopropanol, ethoxyethanol, allyl alcohol, ethylene glycol, or combinations thereof. In one embodiment of the present invention, the alcohol solution is preferred a 40wt% to 60wt% alcohol solution. In one preferred embodiment of the present invention, the alcohol solution is an aqueous solution of methanol, ethanol, isopropanol or combinations thereof.

According to an embodiment of the present method, the alcohol solution further comprises a tackifier to enhance the adherence of the titanium oxide and/or titanium hydroxide, which is formed through the reaction of the titanium alkoxide with the alcohol solution, to the surfaces and the sidewalls of the porous structures of the porous polyolefin substrate. Suitable tackifiers can be, for example but not limited to, poly(meth)acrylate, crosslinkable (meth)acrylic resin, poly-n-vinylacetamide, acrylonitrile-acrylate copolymer, acrylonitrile-acrylamide-acrylate copolymer, or combinations thereof. In a preferred embodiment of the present invention, one or more than one tackifier can be used in the alcohol solution. In a preferred embodiment of the present invention, the using amount of the tackifier in the alcohol solution is 0.05 wt% to 3.0 wt%, and preferably 0.1 wt% to 2.0 wt%.

According to an embodiment of the present method, suitable tackifiers can be obtained from commercialized products, for example BM-950B (available from ZEON Corp. JP), PNVA GE191 series like GE191-103, GE191-104, GE191-107 or GE191-108 (available from Showa Denko K.K., JP), Soteras™ CCS-V Binder (available from Ashland Inc., USA) or CYJ-01 (available from Zhuhai Chenyu New Material Technology Co., Ltd, CN).

According to an embodiment of the present method, the alcohol solution further comprises additives such as flame retardants, antioxidants, surface modifiers or antistatic agents.

According to an embodiment of the present method, the applying method of the precursor solution and the alcohol solution can be dip coating or spray coating.

Another aspect of the present invention is to provide a low thermal shrinkage separator, comprising a porous polyolefin substrate with a plurality of porous structures on surfaces and interiors thereof; and a low thermal shrinkage thin film formed on the surfaces and sidewalls of the porous structures of the porous polyolefin substrate; wherein the low thermal shrinkage thin film is a composite thin layer formed of titanium oxide and/or titanium hydroxide reacted by the titanium alkoxide and the alcohol solution, and hexamethyldisilazane.

In the low thermal shrinkage separator of the present invention, the low thermal shrinkage thin layer on the surfaces of the porous polyolefin substrate smd the sidewalls of the porous structures not only maintains the mechanical properties, ion permeability and chemical resistance of electrolyte of dry-stretching porous polyolefin substrate, but also improves the thermal shrinkage resistance and electrolyte wettability without significantly increasing the thickness of the porous polyolefin substrate.

The present invention will be explained in further detail with reference to the examples. However, the present invention is not limited to these examples.

Examples

Example 1: Preparation of a separator

196.4 g of anhydrous alcohol (99.5%) was mixed and well-stirred with 1.6 g of titanium isopropoxide (TTIP) and 2 g of hexamethyldisilazane (HMDS) at room temperature to generate a titanium isopropoxide solution. Then, 98.4 g of deionized water, 98.4 g of ethanol (95%) and 3 g of poly-N-vinylacetamide (PNVA GE191-107) were added to mixed and well-stirred, and 0.13 g of acrylonitrile-acrylamide-acrylate copolymer (BM-950B) was added thereafter to generate a ethanol solution after being well-stirred at room temperature.

A porous polyolefin substrate with a thickness of 13.8 $\mu$m (PP/PE/PP triple-layered separator, porosity 45%, obtained by BenQ Materials Co., Ltd.) was immersed in the titanium isopropoxide solution of this example and used a scraper to remove residual solution on the surface, and then immersed in the ethanol solution. The porous polyolefin substrate was taken out and dried at 80 °C to obtain a low thermal shrinkage separator with a low thermal shrinkage thin film formed on the surfaces of the porous polyolefin substrate and the sidewalls of the porous structures.

The obtained low thermal shrinkage separator was tested by the following methods. The testing results were shown as the following Table 1.

Thickness of separators: The thickness was measured according to GB/T6672-2001. Thickness Analyzer (VL-50-B, available from Mitutoyo, Japan) was used to measure the thickness of the separators. The measurement was conducted by a flat probe with a diameter of 3 mm under a measuring force of 0.01N.

Measurement of Gurley number: The Gurley number was measured according to ASTM D-726. The separator was cut into a sample of 1 inch $\times$1 inch and tested by an air permeability tester. The Gurley number was obtained by measuring the time for 100 C.C. of air to pass through the separator.

Thermal shrinkage test: The separator was cut into a sample of 10 cm $\times$ 10 cm, and the initial length in machine direction (MD) and the initial length in transverse direction (TD) were measured and marked as M0 and T0 on the center of the sample before testing. Then the marked sample was sandwiched between two A4 papers and heated in an oven at 130 °C 150 °C for 1 hr respectively. After heating, the sample was removed out of the oven and put in the same environment as that of the thermal shrinkage measuring instrument for 30 minutes, and then the length in machine direction (MD) and the length in transverse direction (TD) were measured and marked as M1 and T1.

$$\text{The thermal shrinkage rate (SMD) in machine direction (MD)} = (M0-M1)/M0 \times 100\%$$

The thermal shrinkage rate (STD) in transverse direction (TD)=(T0-T1)/T0 × 100%

Absorptivity test: The separator for testing is cut into a sample of 80 mm × 10 mm, and the sample was vertically hung and soaked in a solvent (mixture of propylene carbonate (PC) and diethyl carbonate (DEC) in a weight ratio of 1:1) in a closed space, and the initial level height of the solvent was marked on the sample as a starting point. After 1 minute, the capillary absorbing height from the starting point of the sample was measured.

Measurement of contact angle : The contact angle of the separator sample was measured by the Surface Electro Optics (SEO) Phoenix-150 contact angle measuring instrument (available from Applied Microtech Inc., Taiwan), wherein propylene carbonate (PC, with a purity of 99%) was absorbed by an syringe with a needle diameter of 2 mm and installed on Phoenix-150, and the separator sample was fixed on the sample carrier of Phoenix-150, and then a volume droplet of the propylene carbonate (PC, with a purity of 99%) was injected onto the separator sample by the syringe, and the contact angle of the separator sample was determined after being measured with the optical system CCD and calculated by the computer software of Phoenix-150.

Impedance test: The separator for testing was cut into a sample with a diameter of 24 mm, and then immersed in an electrolyte for 10 minutes, and then sandwiched between two stainless steel electrodes to separate the two stainless steel electrodes, and then tightly joined by applying a weight of 500 g, and then the current signal was measured by the AC-impedance method, and the impedance value of the separator sample was calculated.

Example 2: Preparation of a separator

196.4 g of anhydrous alcohol (99.5%) was mixed and well-stirred with 1.6 g of titanium isopropoxide (TTIP) and 2 g of hexamethyldisilazane (HMDS) at room temperature to generate a titanium isopropoxide solution. Then, 98.4 g of deionized water, 98.4 g of isopropanol (95%) and 3 g of poly-N-vinylacetamide (PNVA GE191-107) were added to mixed and well-stirred, and 0.13 g of acrylonitrile-acrylamide-acrylate copolymer (BM-950B) was added thereafter to generate an isopropanol solution after being well-stirred at room temperature.

A porous polyolefin substrate with a thickness of 13.8 μm (PP/PE/PP triple-layered separator, porosity 45%, obtained by BenQ Materials Co., Ltd.) was immersed in the titanium isopropoxide solution of this example and used a scraper to remove residual solution on the surface, and then immersed in the isopropanol solution. The porous polyolefin substrate was taken out and dried at 80 °C to obtain a low thermal shrinkage separator with a low thermal shrinkage thin film formed on the surfaces of the porous polyolefin substrate and the sidewalls of the porous structures.

The obtained separator was tested by the above methods. The testing results were shown as the following Table 1.

Example 3: Preparation of a separator

197.2 g of anhydrous alcohol (99.5%) was mixed and well-stirred with 0.8 g of titanium isopropoxide (TTIP) and 2 g of hexamethyldisilazane (HMDS) at room temperature to generate a titanium isopropoxide solution. Then, 98.4 g of deionized water, 98.4 g of isopropanol (95%) and 3 g of poly-N-vinylacetamide (PNVA GE191-107) were added to mixed and well-stirred, and 0.13 g of acrylonitrile-acrylamide-acrylate copolymer (BM-950B) was added thereafter to generate a isopropanol solution after being well-stirred at room temperature.

A porous polyolefin substrate with a thickness of 13.8 μm (PP/PE/PP triple-layered separator, porosity 45%, obtained by BenQ Materials Co., Ltd.) was immersed in the titanium isopropoxide solution of this example and used a scraper to remove residual solution on the surface, and then immersed in the isopropanol solution. The porous polyolefin substrate was taken out and dried at 80 °C to obtain a low thermal shrinkage separator with a low thermal shrinkage thin film formed on the surfaces of the porous polyolefin substrate and the sidewalls of the porous structures.

The obtained separator was tested by the above methods. The testing results were shown as the following Table 1.

Comparative Example 1:

The same porous polyolefin substrate with a thickness of 13.8 μm (PP/PE/PP triple-layered separator, porosity 45%, obtained by BenQ Materials Co., Ltd.) as in Examples 1 to 3 was used as the Comparative Example 1, and the separator was tested by the methods described in Example 1, and the testing results were shown as the following Table 1.

Table 1. Testing results of Examples 1~3 and Comparative Examples 1

| Table 1 | | Comparative Example 1 | Example 1 | Example 2 | Example 3 |
|---|---|---|---|---|---|
| Total thickness of the separator (µm) | | 13.8 | 13.8 | 13.8 | 13.8 |
| Thickness of the porous substrate (µm) | | 13.8 | 13.8 | 13.8 | 13.8 |
| Gurley Number (sec/100c.c.) | | 125 | 143 | 117 | 120 |
| Thermal Shrinkage (130°C @1hr) | MD | 27 | 16 | 18 | 18 |
| | TD | 0 | 0 | 0 | 0 |
| Thermal Shrinkage (150°C @1hr) | MD | 45 | 36 | 39 | 36 |
| | TD | 0 | 0 | 0 | 0 |
| Capillary Absorbing Height (mm) | | 0.5 | 2 | 2 | 2 |
| Contact Angle (°) | | 52.3 | 36 | 42.9 | 41 |
| Impedance(ohm/cm$^2$) | | 0.49 | 0.45 | 0.58 | 0.5 |

As shown in the testing results listed in Table 1, the low thermal shrinkage separators of Examples 1 to 3 of the present invention have enhanced thermal shrinkage resistance compared to Comparative Example 1, and the wettability to the electrolyte are better, which can also improve the electrical performance of the lithium battery.

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

**Claims**

1.   A method for manufacturing a low thermal shrinkage separator, comprising the steps of:

   providing a porous polyolefin substrate with a plurality of porous structures on surfaces and interiors thereof;
   applying a precursor solution containing a 0.1wt% to 3wt% titanium alkoxide solution and a 0.2wt% to 3wt% hexamethyldisilazane to the porous polyolefin substrate; and
   applying a 30wt% to 70wt% alcohol solution to form a low thermal shrinkage thin film on the surfaces and sidewalls of the porous structures of the porous polyolefin substrate.

2.   The method as claimed in Claim 1, wherein the titanium alkoxide of the precursor solution is titanium methoxide, titanium ethoxide, titanium isopropoxide, titanium tert-butoxide, or combinations thereof, and a solvent of the precursor solution is methanol, ethanol, isopropanol, or combinations thereof.

3.   The method as claimed in Claim 1, wherein the alcohol solution is an aqueous solution of methanol, ethanol, isopropanol, ethoxyethanol, allyl alcohol, ethylene glycol, or combinations thereof.

4.   The method as claimed in Claim 1, wherein the alcohol solution further comprises a tackifier, and the tackifier is used in an amount of 0.05wt% to 5wt%.

5.   The method as claimed in Claim 4, wherein the tackifier is poly(meth)acrylate, poly-n-vinylacetamide, crosslinkable (meth)acrylic resin, acrylonitrile-acrylate copolymer, acrylonitrile-acrylamide-acrylate copolymer, or combinations thereof.

6.   The method as claimed in Claim 1, wherein the porous polyolefin substrate is a single-layered or multi-layered porous polyolefin substrate of polyethylene, polypropylene or copolymers thereof obtained by dry-stretching method.

7.   The method as claimed in Claim 1, wherein the applying of the precursor solution and the alcohol solution is accomplished by dip coating or spray coating.

8. A low thermal shrinkage separator, comprising:

a porous polyolefin substrate with a plurality of porous structures on surfaces and interiors thereof; and
a low thermal shrinkage thin film formed on surfaces and sidewalls of the porous structures of the porous polyolefin substrate;
wherein the low thermal shrinkage thin film is a composite thin layer formed of titanium oxide and/or titanium hydroxide obtained by reacting of a titanium alkoxide solution and an alcohol solution, and hexamethyldisilazane.

Europäisches
Patentamt

European
Patent Office

Office européen
des brevets

# EUROPEAN SEARCH REPORT

Application Number

EP 23 20 5475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/315384 A1 (ABD ELHAMID MAHMOUD H [US] ET AL) 13 December 2012 (2012-12-13) * paragraph [0034]; claim all; example 1 * ----- | 1-8 | INV. H01M50/403 H01M10/052 H01M50/417 |
| A | US 2013/327704 A1 (WU MARK Y [TW] ET AL) 12 December 2013 (2013-12-12) * paragraph [0033] - paragraph [0036]; example 4 * ----- | 1-8 | H01M50/446 H01M50/457 |

TECHNICAL FIELDS
SEARCHED (IPC)

H01M

The present search report has been drawn up for all claims

| Place of search | Date of completion of the search | Examiner |
|---|---|---|
| Munich | 12 March 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

**EP 23 20 5475**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-03-2024**

| Patent document cited in search report | | Publication date | Patent family member(s) | | Publication date |
|---|---|---|---|---|---|
| US 2012315384 | A1 | 13-12-2012 | CN | 102820445 A | 12-12-2012 |
| | | | DE | 102012209381 A1 | 13-12-2012 |
| | | | US | 2012315384 A1 | 13-12-2012 |
| US 2013327704 | A1 | 12-12-2013 | TW | 201351758 A | 16-12-2013 |
| | | | US | 2013327704 A1 | 12-12-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 112130240